# EUROPEAN PATENT SPECIFICATION

(11) **EP 3 275 708 B1**
(45) Date of publication and mention of the grant of the patent: **15.05.2019**
(21) Application number: 16181793.7
(22) Date of filing: 28.07.2016
(51) Int. Cl.: B60J 1/20, B60J 7/00

(54) **OPEN ROOF CONSTRUCTION FOR A VEHICLE AND ROLLO ASSEMBLY FOR USE THEREIN**
OFFENE DACHKONSTRUKTION FÜR EIN FAHRZEUG UND ROLLOANORDNUNG ZUR VERWENDUNG DARIN
STRUCTURE DE TOIT OUVRANT POUR VÉHICULE ET SON ENSEMBLE ROULANT ASSOCIÉ

(43) Date of publication of application: 31.01.2018
(73) Proprietor: Inalfa Roof Systems Group B.V., 5807 GW Oostrum (NL)
(72) Inventor: TEN-JET-FOEI, Suyanto Teri Wahiyu, 6538 HR NIJMEGEN (NL)
(74) Representative: De Vries & Metman

(56) References cited:
- EP-A1- 2 987 667
- EP-A1- 3 115 237
- EP-A2- 2 902 260
- DE-T5-112012 002 485

## Description

The invention firstly relates to an open roof construction for a vehicle according to the preamble of claim 1.

Such an open roof construction is described in European patent application EP 2 902 260 A2. It describes an open roof construction having a sunscreen comprising a visible portion and a non-visible portion above it. The visible portion is stationary with respect to the sides of the roof opening and the non-visible portion can be unwound at one end and reversed into the visible portion on the opposite end. Thus, the visible portion is stationary, but the length of it varies to open and close the rollo screen. Because of such a stationary position of the rollo screen edge of the visible portion, any connections there also have a stationary position to the stationary part of the open roof construction. This has a positive effect on the life span and reliability of these connections, while allowing to simplify the design of these connections.

It is one of the objects of the present invention to provide an improved open roof construction of the present type, in particular in relation to the holding members.

To obtain this object, the open roof construction comprises the features of the characterizing portion of claim 1.

In this manner, the edges of the sunscreen are reliably held on the one hand and are easily inserted into and removed from the holding groove on the other hand.

In one embodiment, the winding shaft for the rollo screen is rotatable around a stationary axis of rotation, and wherein the rollo screen, starting from the winding shaft, firstly extends in a first direction D1, next around a reversal member at the position of the operating beam and finally back in an opposite second direction D2 and ends at the rollo screen edge which is attached to a stationary member of the open roof construction.

This embodiment has the advantage that the winding shaft, which is relatively bulky, is stationary, so it is not necessary to reserve room for it along the whole length of the sunscreen.

In one embodiment, the hooking member is generally T-shaped. This is a simple shape that can be reliably held behind the narrow entrance opening. If the leg of the T shape is flexible or hingeable it can be wound flat together with the rollo screen.

It is advantageous if the portions determining the narrow entrance opening are flaps extending obliquely inwardly towards the narrow entrance opening and away from the rollo screen.

In this way, the narrow entrance opening will be further closed if a force is exerted on the hooking member by the rollo screen, so it is impossible to pull the hooking member out of the holding groove.

In one embodiment, the portions determining the narrow entrance opening of the holding groove are part of an insert to a guide rail, for example the insert being a one piece part lining a groove in the guide rail.

The holding groove can then be easily formed independent of the guide rail in which it is inserted. The material of the insert may be freely chosen.

However, it is also possible that the portions determining the narrow entrance opening are formed integral with an extruded guide rail. For example, the portions determining the narrow entrance opening and the guide rail may be formed by co-extrusion, preferably 2K co-extrusion.

Preferably, the portions determining the narrow entrance opening are biased toward their narrow holding position, possibly with the help of separate spring members biasing the portions.

The displacing means of the operating beam may include a guide slot to guide the hooking member into the holding groove, while the displacing means of the operating beam may include a spreading member spreading the portions determining the narrow entrance opening in order to allow the hooking member to enter and exit the holding groove.

In one embodiment, the narrow opening of the holding groove is on the upper side thereof.

The advantage of this position of the holding groove is that the tension forces from the rollo screen on the hooking member is at an angle to the outward movement of the hooking member, so that it is almost impossible for the rollo screen to pull the hooking member from the holding groove.

The invention further relates to a rollo assembly intended for use in an open roof construction according to the present invention.

Hereinafter the invention will be elucidated while referring to the drawings, in which:
Fig. 1 is a longitudinal sectional view of an open roof construction according to the present invention;
Fig. 2a and 2b are perspective views of the rollo assembly of the open roof construction of Fig. 1 in a closed and open position, respectively.
Fig. 3 is a perspective view from the rear, showing a part of the rollo screen near an end of the operating beam and a part of the stationary guide.
Fig. 4 is a view corresponding to that of Fig. 3, but without the rollo screen and guide.
Fig. 5 is a cross-sectional view along the line V-V in Fig. 3.
Fig. 6a is an exploded version of the view of Fig. 3, but then viewed from the front.
Fig. 6b is an exploded view corresponding to that of Fig. 6a, but turned 180 degrees around a vertical axis..
Figs. 7a, 7b, 7c and 7d are cross-sectional views along the lines VIIa, VIIb, VIIc and VIId in Fig. 5.
Fig. 8a is a slightly enlarged view of a portion of Fig. 7d.
Figs. 8b - 8h are views similar to that of Fig. 8a, but showing alternative arrangements of the holding groove.
Fig. 9a is a slightly enlarged version of the view of Fig. 7d.
Fig. 9b is a cross-sectional view corresponding to that of Fig. 9a, but showing an alternative embodiment.
Figs. 10a - 10d are an exploded view and a normal perspective view of the slider of Fig. 4, but shown in mirror image and as shown from below in Figs. 10c, 10d.
Fig. 11a is an enlarged version of the view of Fig. 7c, but with a slightly changed arrangement.
Fig. 11b is a perspective view of the embodiment of Fig. 11a.
Figs. 12a - 12e are cross-sectional views of different embodiments of the hooking member and its connection to the edge of the rollo screen.

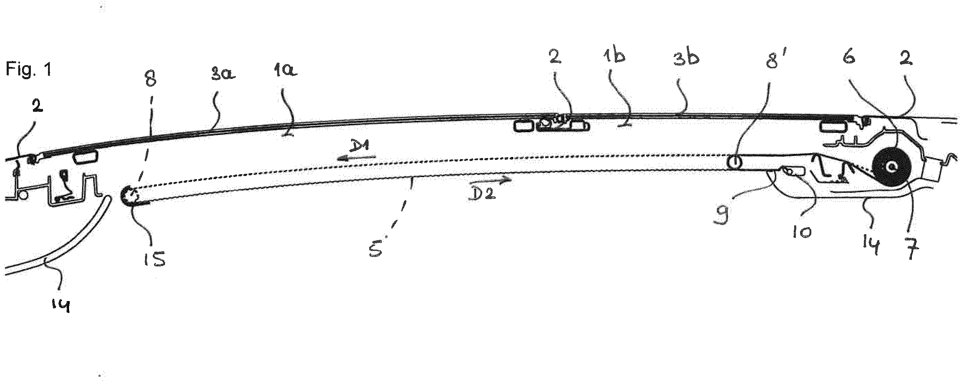

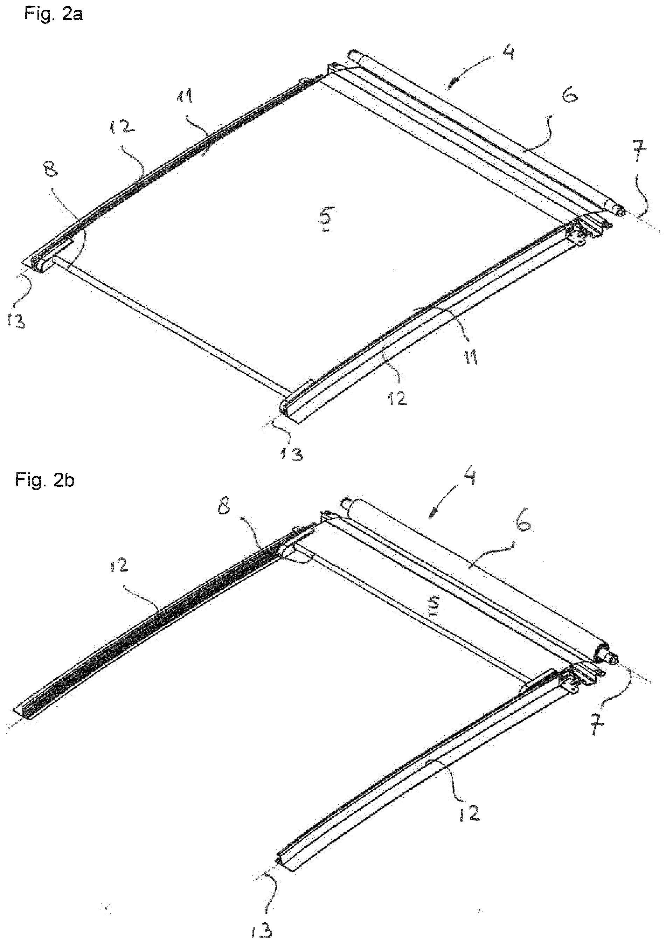

Referring firstly to Figs. 1 and 2, an open roof construction for a vehicle is illustrated. It comprises a roof opening 1 in a stationary roof part 2 which can be closed by a movable roof closure. Here, there is in fact a front roof opening 1a and a rear roof opening 1b, closable by a rigid transparent front panel 3a and a rigid transparent rear panel 3b. As is known in the respective field, such roof panel or panels 3 may be operated (by means not illustrated but generally known) for opening and closing the roof opening 1. One of the panels 3, normally the rear panel 3b, may also be fixed.

A rollo assembly 4, here acting as a sunscreen assembly, is positioned below said roof opening 1 (although it is noted that parts of such a rollo assembly 4 also may be located below the fixed roof panel 3b). The rollo assembly 4 comprises a rollo screen 5 and a winding shaft 6 for the rollo screen 5 which is rotatable around a stationary axis of rotation 7. The rollo screen 5, starting from the winding shaft 6, firstly extends substantially in a first direction D1, next around a reversal member 8 and finally back in an opposite second direction D2 and ends at a rollo screen edge 9 which is attached to a stationary member 10 of the open roof construction.

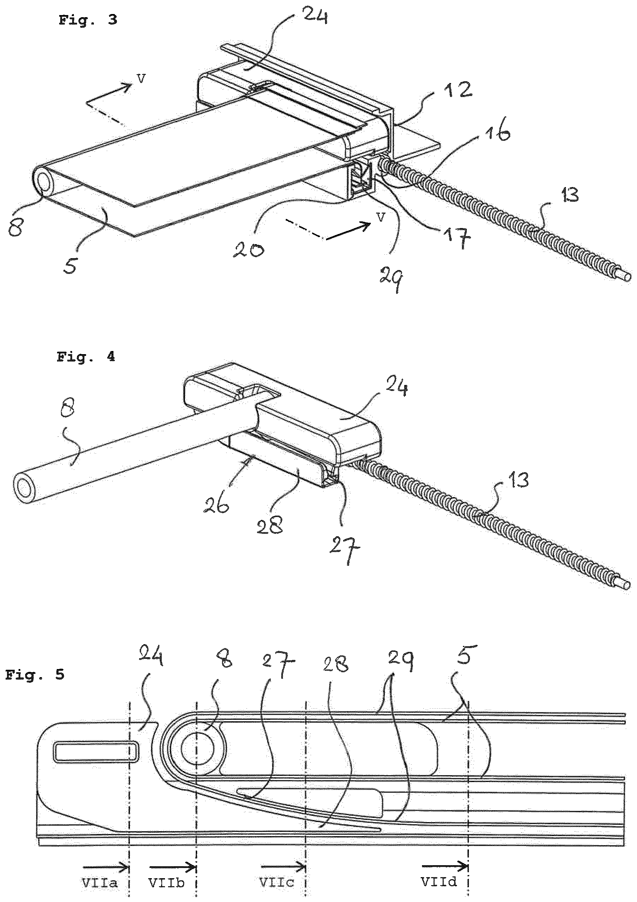

The reversal member 8 is movable in parallel to said first and second directions D1, D2 in correspondence with the amount of rollo screen 5 being wound on or off said winding shaft 6. For achieving the required translational movement of the reversal member 8 it has two opposite longitudinal edges 11 (Fig. 2) guided in two opposite guides 12 extending in parallel to said first and second directions D1,D2 (generally the lengthwise direction of the vehicle) at opposite side edges of the roof opening 1. Two drive cables 13 (which are part of a drive mechanism) are provided engaging said opposite ends 11 of the reversal member 8. The drive cables 13 may run in cable channels 16 (see fig. 3 and further) provided in the guides 12. The position of the reversal member 8 and thus of the rollo screen 5 is controlled by the drive cables 13. In Fig. 1 the reversal member 8 (and thus the rollo screen 5) has been illustrated in two different positions: in solid lines a position 8' in which the rollo screen 5 is in a position substantially fully opening the roof opening 1 (see also Fig. 2b) and at least partially hidden by a headlining 14 and with dashed lines a fully closed position 8 (see also Fig. 2a). Thus, the lower, visible portion of the rollo screen 5 is stationary, only the length thereof varies due to the movement of the reversal member 8.

It is possible that the winding shaft 6 is provided with a spring member (such as an internal coiled spring) biasing the winding shaft 6 in a direction for winding the rollo screen 5. As a result the rollo screen is always kept taut, irrespective the position of the reversal member 8.

In the illustrated embodiment the reversal member 8 comprises a rotatable cylindrical member which will rotate in accordance with the rollo screen 5 moving around it when the reversal member 8 is displaced. As an alternative (not illustrated) the reversal member may comprise a non-rotating member providing or defining a low friction surface intended for engaging the rollo screen 5.

The reversal member 8 further may be provided with a cover member 15 which hides the part of the rollo screen 5 extending around the reversal member 8 from view.

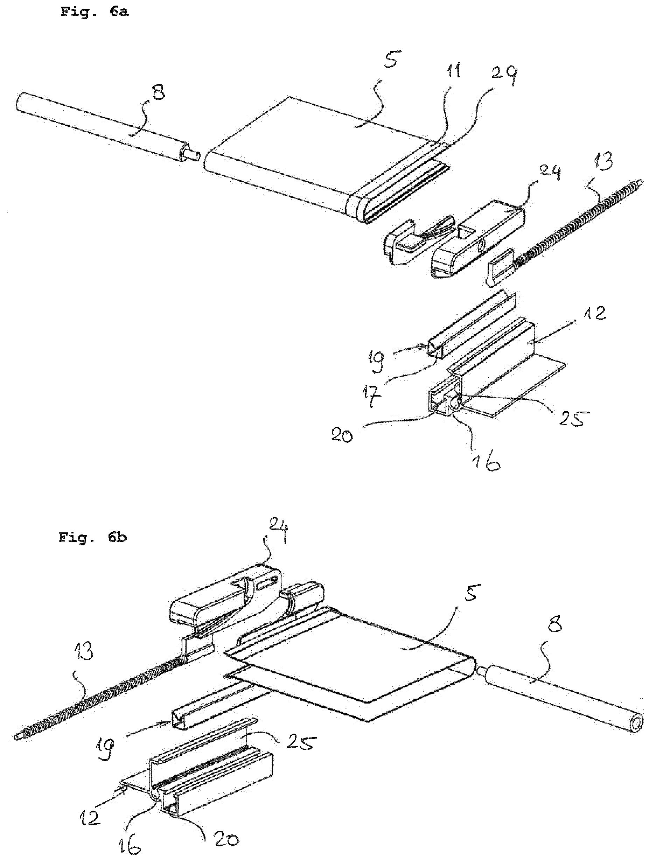

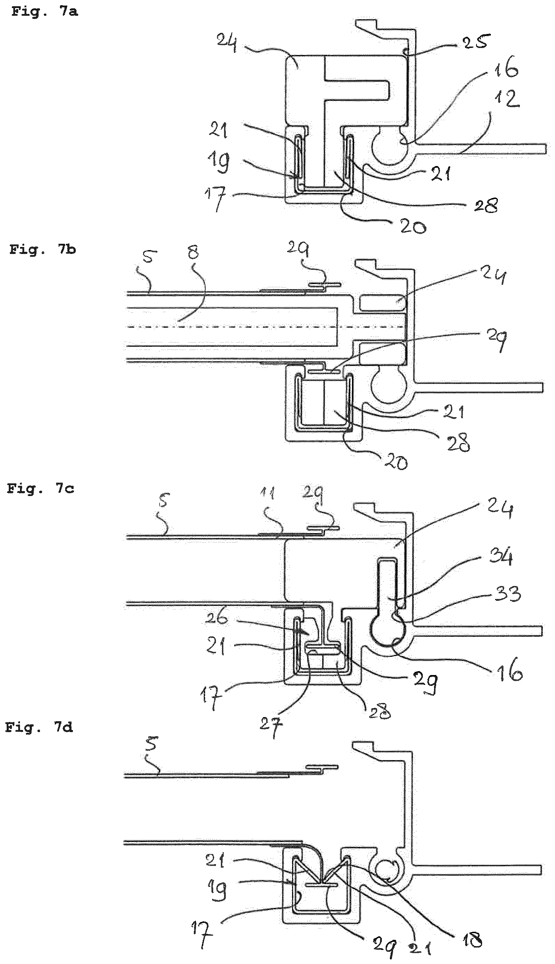

The guides 12 are used for supporting the rollo screen 5 and keeping it in a desired position. Figs. 3 - 7 show the cooperation between one of the guides 12 and the sunscreen 5 in one embodiment. Each guide 12 comprises a holding groove 17 having a narrow entrance opening 18 (see particularly Figs. 3 and 7d). This holding groove 17 is formed by a plastic insert 19 in a groove 20 of the metal guide 12. The narrow entrance opening 18 is formed on the upper side of the holding groove 17 and is defined by wall portions of holding groove 17, here by two downwardly and inwardly extending resiliently bendable and/or hingeable arms or flaps 21. These flaps 21 and their upward holding legs 22 have more or less the shape of an M. A lower bottom portion 23 connects both legs 22 to form the single piece insert 19. The length of flaps 21 and the mutual distance of holding legs 22 is such that the inner ends of flaps 21 will touch before they reach a horizontal orientation, so the narrow entrance opening 18 will close if flaps 21 are forced upwards.

The reversal member 8 and the cover member 15 (not shown here) form the operating beam for the sunscreen 5. At each end of the operating beam, there is provided a slider 24 to which the drive cable 13 is attached. The slider 24 is guided by one or more guide grooves 25 in the guide 12. Displacing means 26 are attached to or formed on the slider 24. They comprise a guide groove 27 and a spreading member 28. These guide groove 27 and spreading member 28 are used to insert and remove a T-shaped hooking member 29 at each the longitudinal edge 11 of the rollo screen 5 into and out of the holding groove 17. In this embodiment, the hooking member 29 is formed by a rigid strip forming the top of the T and a flexible leg attached to the longitudinal edge 11 of rollo screen 5.

Fig. 5 and the cross-sections of Figs. 7a - 7d show that the guide groove 27 and spreading member 28 have a varying position and/or shape when seen in longitudinally different cross-sections according to Figs. 7a - 7d. In the cross-section of Fig. 7b close to the reversal member 8 hooking member 29 arrives above displacing means 26 and holding groove 17. Spreading member 28 is already inside holding groove 17, as shown in Fig. 7a, and spreads inwardly biased flaps 21 such that narrow entrance opening 18 is wide open to allow entrance of T-shaped hooking member 29. In a direction away from the reversal member 8, guide groove 27 gradually descends into holding groove 17 as shown by Figs. 7c and 7d, such that when the guide groove 27 moves along the edge 11 of the rollo screen 5, edge 11 of rollo screen 5 and adjacent hooking member 29 are stretched outwardly and downwardly into holding groove 17.

In Fig. 7c hooking member 29 has completely entered holding groove 17, but it is still inside guide groove 27. At the fourth cross section according to Fig. 7d the T-shaped hooking member 29 has moved out of guide groove 27 and has hooked behind flaps 21 defining narrow entrance opening 18 of the holding groove 17 once spreading member 28 has moved away from the particular cross-section of the holding groove insert 19 and flaps 21 have resiliently moved inwardly above the horizontal portion of the T-shaped hooking member 29 turned upside down. As hooking member 29 is now hooked behind flaps 21 defining narrow entrance opening 18 rollo screen 5 now remains stretched between the guides 12. If a larger force might be exerted on hooking member 29, entrance opening 18 will completely close due to the ends of flaps 21 meeting each other and preventing flaps 21 to further swing in upward direction.

When winding shaft 6 of the rollo screen 5 rotates to wind it, the reversal member 8 moves in opposite direction and the spreading member 28 and guide groove 27 move with it. The hooking member 29 arrives from the position of Fig. 7d in the position of Fig. 7c where it has entered guide groove 27 and is moved vertically by guide groove 27 to a position aligned with the narrow entrance opening 18 which has been opened again by spreading member 28. Thus, when displacing means 26 moves back along the rollo screen 5, the forced guidance by guide groove 27 and assisted by the stretching force of the rollo screen 5 urges hooking member 29 to move upwardly and out of holding groove 17 as is shown in Fig. 7b and 7a.

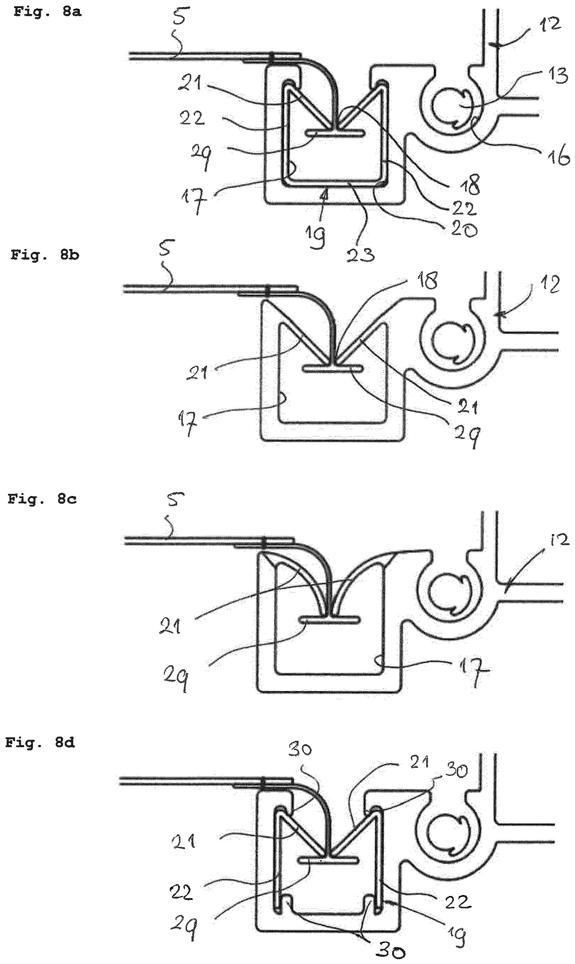

Figs. 8a - 8h show different configurations of holding groove 17.

Fig. 8a shows the arrangement similar to that in the embodiment of Figs. 4 - 7. Fig. 8b shows an embodiment in which flaps 21 bordering narrow entrance opening 18 of holding groove are formed as part of guide 12. This is for example possible through a 1K extrusion process. A better adaptation to the desired properties of guide 12 and flaps 21 can be obtained through a 2K extrusion process, as is the case in the embodiment of Fig. 8c. The flaps 21 can then be made from a different material than guide 12, for example from EPDM leading to flexible, low noise flaps 21. Flaps 21 are shown in a slightly curved shape, instead of a straight shape in the former embodiments. Guide 12 can be made from another plastic material, such as glass reinforced PA6 with PTFE.

Fig. 8d shows an embodiment in which insert 19 is now a two piece insert, the two pieces each comprising a flap 21 and a holding leg 22. Holding lips 30 on guide 12 hold the separate parts 21, 22 in their right position, but allow flaps 21 to move between an entering and holding position.

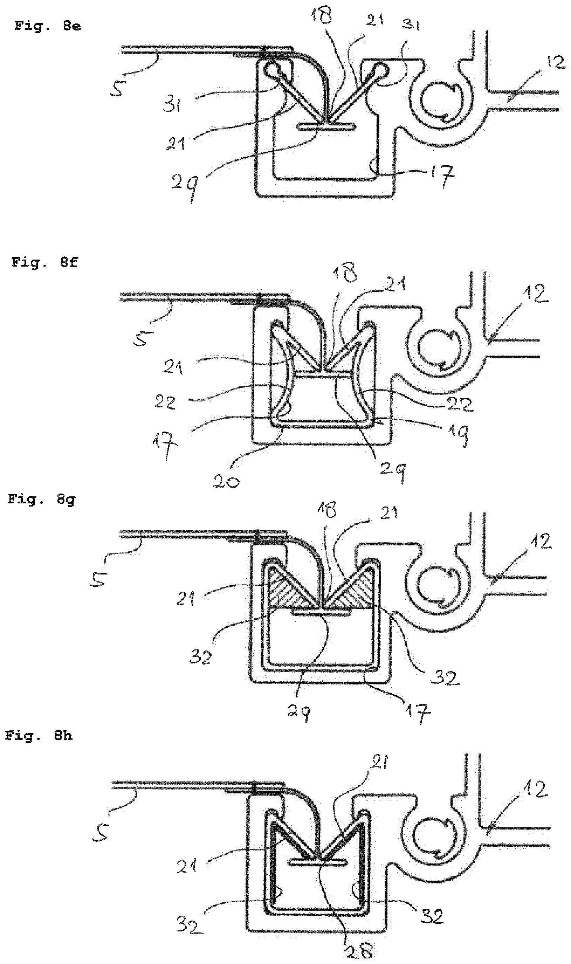

Fig. 8e shows an embodiment in which flaps 21 are formed as separate parts clicked into mounting grooves 31 in guide 12. These flaps 21 might either rotate and/or bend, the latter being the case in the example shown.

The embodiment of Fig. 8f again includes a single piece insert 19 to form holding groove 17 but holding legs 22 are now pre-curved in the holding position of flaps 21 such that they exert an additional biasing force onto flaps 21 in their straight entering position, so that a return of flaps 21 to their holding position is promoted.

Fig. 8g and 8h show other embodiments in which a return of flaps 21 to their holding position is also promoted by an additional biasing force, in this case exerted by separate spring members 32, configured as springy foam cushions in Fig. 8g and as spring steel leaf springs in Fig. 8h.

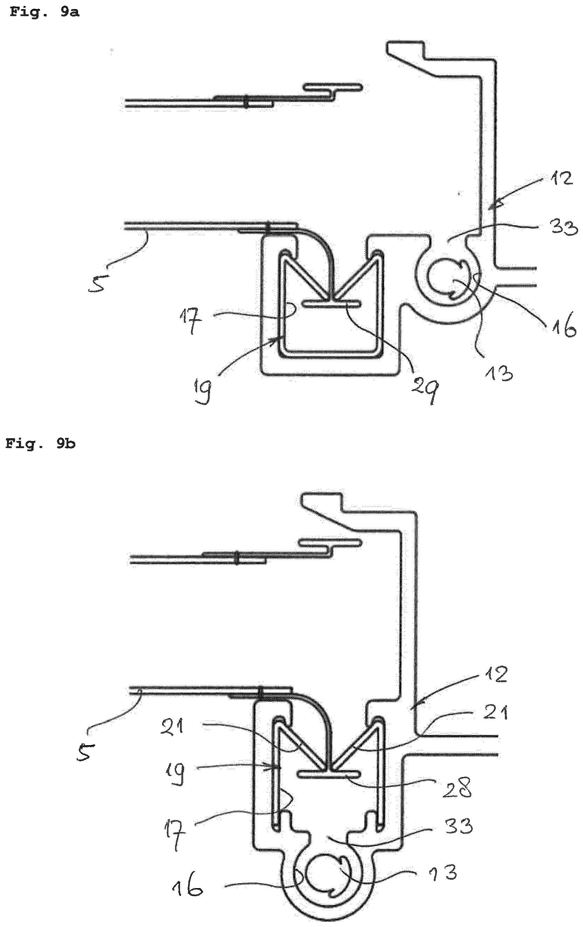

Figs. 9a and 9b show two concepts for guide 12, particularly regarding cable channel 16 therein. In the embodiment of Fig. 9a, cable channel 16 is positioned besides groove 20 for holding groove 17. Cable 13 is attached to slider 24 through an upper cable connection opening 33 by means of a connector 34 (see Fig. 7c). In the embodiment of Fig. 9b, cable channel 16 is positioned below holding groove 17 and is connected to slider 24 via cable connecting opening 33, through groove 20 of guide 12, through holding groove 17 and through opened flaps 21.

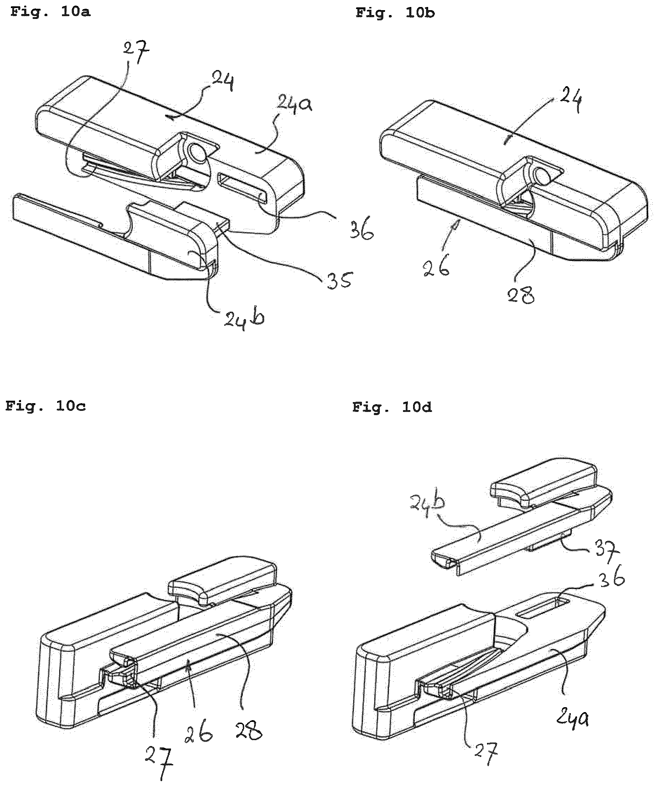

Figs. 10a - 10d show an embodiment of slider 24, especially regarding its assembly from two parts. In this embodiment slider 24 is split up in two horizontally connected parts 24a, 24b in order to be able to form guide groove 27 in a desired shape. If slider 24 would be formed in one piece, this guide groove can only be formed straight when the slider 24 is made by injection moulding. Now, guide groove 27 can also be curved. The two slider parts 24a, 24b can be connected through a protrusion 35 and fitting recess 36 formed in vertical surfaces. Other arrangements are conceivable as well of course.

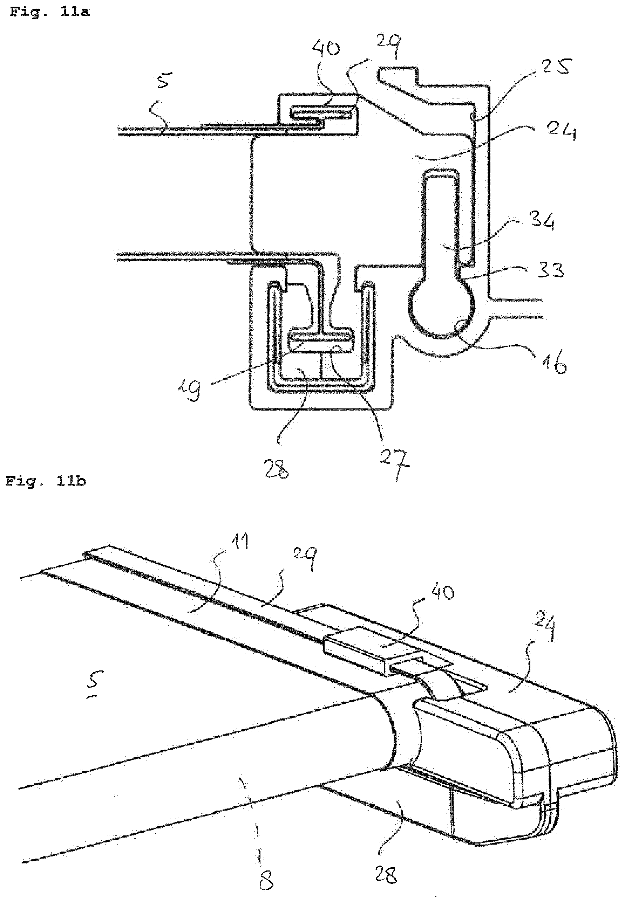

Fig. 11a, 11b show again slider 24 with its reversal member. Now, slider 24 is provided with a pre-positioning member 40 guiding hooking member 29 in its correct lateral position before arriving at reversal member 8. When hooking member 29 is guided downwardly by guide groove 25 an edge part of rollo screen, which is preferably made from stretchable material, is stretched, thereby tensioning rollo screen 5 in lateral direction and preventing it from sagging.

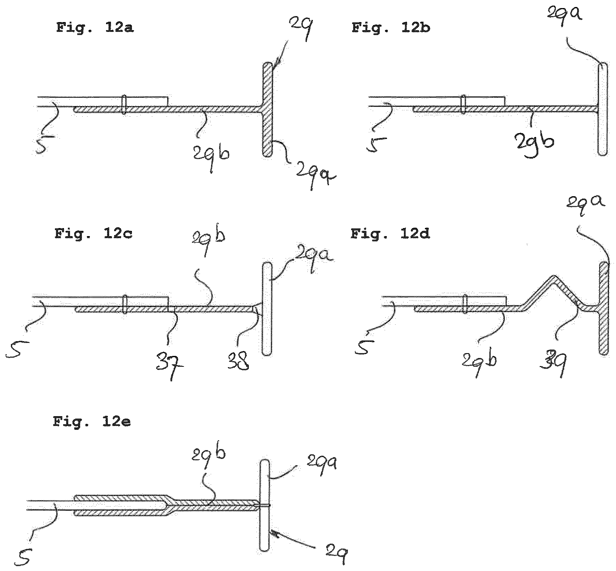

Figs. 12a - 12e show various embodiments of hooking member 29 and its connection to rollo screen 5. In Fig. 12a, T-shaped hooking member 29 is made in one piece, preferably from flexible material in order to be able to fold hooking part 29a with respect to connecting part 29b when rollo screen 5 is wound and in order to enable connecting part 29b to bend when hooking part 29a is guided into holding groove 17. In Fig. 12b, hooking member 29 is formed in one piece, but from two materials, for example by 2K extrusion. Connecting part 29b can then be formed from more flexible material than hooking part 29a. In Fig. 12c, hooking member is formed with two living hinges 37 and 38 to perform the folding or bending movements as described above. In Fig. 12d, hooking member 29 is a one piece part formed with an integrated spring 39 (schematically shown by a zigzag) to allow hooking part 29a to move downwards and to exert a stretching force. In Fig. 12e, hooking member is formed from two pieces stitched together. Connecting part 29b is formed from two flaps folded after stitching and then welded to the upper and lower side of rollo screen 5.

The invention is not limited to the embodiments described before, which may be varied widely within the scope of the invention as defined by the appending claims. For example, it would be possible to provide a rollo assembly without a reversal member. The winding shaft is then arranged at the position of the reversal member, so that the winding shaft moves when the rollo screen is wound or unwound. The holding groove may also have a horizontally directed narrow entrance opening, so that two opposite entrance openings face each other. Further, holding groove is not limited to a closed groove having only the narrow entrance opening. It may also have a more open character.

## Claims

1. Open roof construction for a vehicle, comprising a roof opening (1) in a stationary roof part (2) and a rollo assembly (4) positioned below said roof opening intended for covering the roof opening (1), wherein the rollo assembly (4) comprises a rollo screen (5) and a winding shaft (6), said rollo screen including a rollo screen edge (9) which is attached to a stationary member (10) of the open roof construction, wherein the opposite edge being formed by an operating beam (8, 15) which is movable parallel to the roof opening in first and second directions (D1,D2) in correspondence with the amount of rollo screen (5) being wound on or off said winding shaft (6), the rollo screen having two longitudinal edges (11) which, when the rollo screen is wound off, are brought into engagement with holding members extending alongside the longitudinal edges of the roof opening, **characterized in that** the holding members each comprise a least a holding groove (17) having a narrow entrance opening (18), the longitudinal edges (11) of the rollo screen (5) each comprising a hooking member (29) which is insertable into the holding groove (17) through the narrow entrance opening (18) and hooks behind this narrow entrance opening, the operating beam (8, 15) being provided with displacing means (26) acting on portions (21) of the holding groove (17) determining the narrow entrance opening (18) thereof to enable the hooking member to enter and exit the holding groove (17) through the narrow entrance opening.

2. Open roof construction according to claim 1, wherein the winding shaft (6) for the rollo screen is rotatable around a stationary axis of rotation (7), and wherein the rollo screen (5), starting from the winding shaft (6), firstly extends in a first direction (D1), next around a reversal member (8) at the position of the operating beam (8, 15) and finally back in an opposite second direction (D2) and ends at the rollo screen edge (9) which is attached to a stationary member (10) of the open roof construction.

3. Open roof construction according to claim 1 or 2, wherein the hooking member (29) is generally T-shaped.

4. Open roof construction according to any of the preceding claims, wherein the portions (21) determining the narrow entrance opening (18) are flaps extending obliquely inwardly towards the narrow entrance opening and away from the rollo screen (5).

5. Open roof construction according to any of the preceding claims, wherein the portions (21) determining the narrow entrance opening (18) of the holding groove (17) are part of an insert (19) to a groove (20) of a guide (12).

6. Open roof construction according to claims 4 and 5, wherein the insert (19) is a one piece part lining the groove (20) in the guide (12).

7. Open roof construction according to any of claims 1 - 4, wherein the portions (21) determining the narrow entrance opening (18) are formed integral with an extruded guide (12).

8. Open roof construction according to claim 8, wherein the portions (21) determining the narrow entrance opening (18) and the guide (12) are formed by co-extrusion, preferably 2K co-extrusion.

9. Open roof construction according to any of the preceding claims, wherein the portions (21) determining the narrow entrance opening (18) are biased toward their narrow holding position.

10. Open roof construction according to claim 9, wherein the portions (21) determining the narrow entrance opening (18) are biased by separate spring members (32).

11. Open roof construction according to any of the preceding claims, wherein the displacing means (26) of the operating beam (8, 15, 24) includes a guide groove (27) to guide the hooking member (29) into and out of the holding groove (17).

12. Open roof construction according to any of the preceding claims, wherein the displacing means (26) of the operating beam (8, 15, 24) includes a spreading member (28) spreading the portions (21) determining the narrow entrance opening (18) in order to allow the hooking member (29) to enter and exit the holding groove (17).

## Patentansprüche

1. Offendachkonstruktion für ein Fahrzeug, aufweisend eine Dachöffnung (1) in einem stationären Dachteil (2) und eine unterhalb der Dachöffnung angeordnete Rollo-Einrichtung (4), welche zum Abdecken der Dachöffnung (1) vorgesehen ist, wobei die Rollo-Einrichtung (4) einen Rollo-Schirm (5) und eine Wickelwelle (6) aufweist, wobei der Rollo-Schirm einen Rollo-Schirm-Rand (9) aufweist, welcher an einem stationären Element (10) der Offendachkonstruktion angebracht ist, wobei das entgegengesetzte Ende durch einen Betätigungsstab (8, 15), der korrespondierend mit dem Anteil an auf die Wickelwelle (6) auf- oder davon abgewickeltem Rollo-Schirm (5) parallel zur Dachöffnung in eine erste und eine zweite Richtung (D1, D2) bewegbar ist, gebildet ist, wobei der Rollo-Schirm zwei longitudinale Enden (11) aufweist, welche, wenn der Rollo-Schirm abgewickelt wird, in Eingriff mit Halteelementen, die sich entlang den longitudinalen Enden der Dachöffnung erstrecken, gebracht werden, **gekennzeichnet dadurch, dass** die Haltelemente jeweilig mindestens eine Haltenut (17), die eine schmale Eingangsöffnung (18) hat, aufweisen, wobei die longitudinalen Enden (11) des Rollo-Schirms (5) jeweilig ein Hakenelement (29), welches in die Haltenut (17) durch die schmale Eingangsöffnung (18) einbringbar ist und hinter dieser schmalen Eingangsöffnung einhakt, aufweisen, wobei der Betätigungsstab (8, 15) mit Verschiebemittel (26) versehen ist, welche auf Abschnitte (21) der Haltenut (17), die deren schmale Eingangsöffnung (18) festlegen, einwirken, um es dem Hakenelement zu erlauben, durch die schmale Eingangsöffnung in die Haltenut (17) einzutreten oder diese zu verlassen.

2. Offendachkonstruktion gemäß Anspruch 1, wobei die Wickelwelle (6) für den Rollo-Schirm um eine stationäre Drehachse (7) drehbar ist, und wobei der Rollo-Schirm (5), ausgehend von der Wickelwelle (6), sich zuerst in eine erste Richtung (D1), als nächstes um ein Umkehrelement (8) an der Position des Betätigungsstabs (8, 15) und schließlich zurück in eine entgegensetzte, zweite Richtung (D2) erstreckt und an dem Rollo-Schirm-Rand (9), welcher an dem stationären Element (10) der Offendachkonstruktion angebracht ist, endet.

3. Offendachkonstruktion gemäß Anspruch 1 oder 2, wobei das Hakenelement (28) im Wesentlichen T-förmig ist.

4. Offendachkonstruktion gemäß irgendeinem der vorhergehenden Ansprüche, wobei die Abschnitte (21), welche die schmale Eingangsöffnung (18) festlegen, Klappen sind, welche sich schräg einwärts in Richtung der schmalen Eingangsöffnung und weg von dem Rollo-Schirm (5) erstrecken.

5. Offendachkonstruktion gemäß irgendeinem der vorhergehenden Ansprüche, wobei die Abschnitte (21), welche die schmale Eingangsöffnung (18) der Haltenut (17) festlegen, Teil eines Einsatzes (19) in eine Nut (20) einer Führung (12) sind.

6. Offendachkonstruktion gemäß Ansprüchen 4 und 5, wobei der Einsatz (19) ein einstückiges Teil ist, welches die Nut (20) in der Führung (12) verkleidet.

7. Offendachkonstruktion gemäß irgendeinem der Ansprüche 1 - 4, wobei die Abschnitte (21), welche die schmale Eingangsöffnung (18) festlegen, integral mit einer extrudierten Führung (12) ausgebildet sind.

8. Offendachkonstruktion gemäß Anspruch 8, wobei die Abschnitte (21), welche die schmale Eingangsöffnung (18) festlegen, und die Führung (12) durch Koextrudieren, bevorzugt 2K-Koextrudieren, ausgebildet sind.

9. Offendachkonstruktion gemäß irgendeinem der vorhergehenden Ansprüche, wobei die Abschnitte (21), welche die schmale Eingangsöffnung (18) festlegen, in Richtung ihrer schmalen, haltenden Stellung vorgespannt sind.

10. Offendachkonstruktion gemäß Anspruch 9, wobei die Abschnitte (21), welche die schmale Eingangsöffnung (18) festlegen, durch separate Federelemente (32) vorgespannt sind.

11. Offendachkonstruktion gemäß irgendeinem der vorhergehenden Ansprüche, wobei das Verschiebemittel (26) des Betätigungsstabs (8, 15, 24) aufweist eine Führungsnut (27) zum Führen des Hakenelements (29) in die Haltenut (17) hinein und aus dieser heraus.

12. Offendachkonstruktion gemäß irgendeinem der vorhergehenden Ansprüche, wobei das Verschiebemittel (26) des Betätigungsstabs (8, 15, 24) aufweist ein Spreizelement (28), welches die Abschnitte (21), welche die schmale Eingangsöffnung (18) festlegen, spreizt, um es dem Hakenelement (29) zu erlauben, in die Haltenut (17) einzutreten oder diese zu verlassen.

## Revendications

1. Construction de toit ouvrant pour un véhicule, comprenant une ouverture de toit (1) dans une partie de toit fixe (2) et un ensemble rouleau (4) positionné en dessous de ladite ouverture de toit destiné à couvrir l'ouverture de toit (1), dans laquelle l'ensemble rouleau (4) comprend un écran de protection à rouleau (5) et un arbre d'enroulement (6), ledit écran de protection à rouleau incluant un bord d'écran de protection à rouleau (9) qui est attaché à un organe fixe (10) de la construction de toit ouvrant, dans laquelle le bord opposé formé par une traverse de fonctionnement (8, 15) qui est mobile parallèle à l'ouverture de toit dans des première et seconde directions (D1, D2) en correspondance avec la quantité d'enroulement ou de déroulement de l'écran de protection à rouleau (5) sur ou depuis ledit arbre d'enroulement (6), l'écran de protection à rouleau ayant deux bords longitudinaux (11) qui, lorsque l'écran de protection à rouleau est déroulé, sont amenés en enclenchement avec des organes de maintien s'étendant le long des bords longitudinaux de l'ouverture de toit, **caractérisée en ce que** les organes de maintien comprennent chacun au moins une gorge de maintien (17) ayant une ouverture d'entrée étroite (18), les bords longitudinaux (11) de l'écran de protection à rouleau (5) comprenant chacun un organe d'accrochage (29) qui est insérable dans la gorge de maintien (17) à travers l'ouverture d'entrée étroite (18) et s'accroche derrière cette ouverture d'entrée étroite, la traverse de fonctionnement (8, 15) étant pourvue d'un moyen de déplacement (26) agissant sur des portions (21) de la gorge de maintien (17) déterminant son ouverture d'entrée étroite (18) pour permettre à l'organe d'accrochage d'entrer et de sortir de la gorge de maintien (17) à travers l'ouverture d'entrée étroite.

2. Construction de toit ouvrant selon la revendication 1, dans laquelle l'arbre d'enroulement (6) pour l'écran de protection à rouleau peut tourner autour d'un axe de rotation fixe (7), et dans laquelle l'écran de protection à rouleau (5), en partant de l'arbre d'enroulement (6), s'étend d'abord dans une première direction (D1), puis autour d'un organe d'inversion (8) à la position de la traverse de fonctionnement (8, 15) et enfin de retour dans une seconde direction opposée (D2) et se termine au niveau du bord d'écran de protection à rouleau (9) qui est attaché à un organe fixe (10) de la construction de toit ouvrant.

3. Construction de toit ouvrant selon la revendication 1 ou 2, dans laquelle l'organe d'accrochage (29) est généralement en forme de T.

4. Construction de toit ouvrant selon l'une quelconque des revendications précédentes, dans laquelle les portions (21) déterminant l'ouverture d'entrée étroite (18) sont des volets s'étendant à l'oblique vers l'intérieur vers l'ouverture d'entrée étroite et à l'opposé de l'écran de protection à rouleau (5).

5. Construction de toit ouvrant selon l'une quelconque des revendications précédentes, dans laquelle les portions (21) déterminant l'ouverture d'entrée étroite (18) de la gorge de maintien (17) font partie d'un insert (19) dans une gorge (20) d'un guide (12).

6. Construction de toit ouvrant selon les revendications 4 et 5, dans laquelle l'insert (19) est une partie d'une seule pièce revêtant la gorge (20) dans le guide (12).

7. Construction de toit ouvrant selon l'une quelconque des revendications 1 à 4, dans laquelle les portions (21) déterminant l'ouverture d'entrée étroite (18) sont formées d'un seul tenant avec un guide extrudé (12).

8. Construction de toit ouvrant selon la revendication 8, dans laquelle les portions (21) déterminant l'ouverture d'entrée étroite (18) et le guide (12) sont formées par co-extrusion, de préférence par co-extrusion 2K.

9. Construction de toit ouvrant selon l'une quelconque des revendications précédentes, dans laquelle les portions (21) déterminant l'ouverture d'entrée étroite (18) sont sollicitées vers leur position de maintien étroite.

10. Construction de toit ouvrant selon la revendication 9, dans laquelle les portions (21) déterminant l'ouverture d'entrée étroite (18) sont sollicitées par des organes ressorts séparés (32).

11. Construction de toit ouvrant selon l'une quelconque des revendications précédentes, dans laquelle le moyen de déplacement (26) de la traverse de fonctionnement (8, 15, 24) inclut une gorge de guidage (27) pour guider l'organe d'accrochage (29) dans et hors de la gorge de maintien (17).

12. Construction de toit ouvrant selon l'une quelconque des revendications précédentes, dans laquelle le moyen de déplacement (26) de la traverse de fonctionnement (8, 15, 24) inclut un organe d'étalement (28) étalant les portions (21) déterminant l'ouverture d'entrée étroite (18) afin de permettre à l'organe d'accrochage (29) d'entrer et de sortir de la gorge de maintien (17).
